# EUROPÄISCHE PATENTSCHRIFT

(11) **EP 2 875 854 B1**
(45) Veröffentlichungstag und Bekanntmachung des Hinweises auf die Patenterteilung: **25.12.2019**
(21) Anmeldenummer: 14450048.5
(22) Anmeldetag: 18.11.2014
(51) Int. Cl.: B01D 45/00, B01D 50/00

(54) **Rauchgasreinigungsanlage zur Abscheidung von Schadstoffen aus Rauchgasen**
Flue gas purification system for elimination of noxious substances from flue gas
Installation de nettoyage de gaz de fumée destinée à séparer des substances toxiques des gaz de fumée

(30) Priorität: 18.11.2013 AT 8922013
(43) Veröffentlichungstag der Anmeldung: 27.05.2015
(73) Patentinhaber: APF Advanced Particle Filters GmbH, 5023 Salzburg-Gnigl (AT)
(72) Erfinder: Gaderer, Matthias, A-5310 Mondsee (AT); Steindl, Herbert, A-5020 Salzburg (AT)
(74) Vertreter: Keschmann, Marc

(56) Entgegenhaltungen:
- EP-A1- 0 262 274
- EP-A1- 1 582 251
- EP-A2- 0 407 713
- AT-A4- 505 295
- DE-A1- 3 009 215
- DE-A1- 4 330 782
- GB-A- 770 932

## Beschreibung

Die Erfindung betrifft eine Rauchgasreinigungsanlage zur Abscheidung von Schadstoffen aus Rauchgasen umfassend mindestens einen Grobstaubabscheider, ein an den Grobstaubabscheider angeschlossenes Trockenelektrofilter und mindestens einen Wärmeübertrager, wobei der Grobstaubabscheider, das Trockenelektrofilter und der Wärmeübertrager miteinander verbunden und nacheinander von dem Rauchgas durchströmbar sind, wobei das Trockenelektrofilter, der Wärmeübertrager und der Grobstaubabscheider in einem gemeinsamen wärmeisolierten Gehäuse angeordnet sind.

Rauchgasreinigungsanlagen zum Abscheiden von Schadstoffen in Kombination mit einer Wärmerückgewinnung von Restwärme im Abgas sind bekannt. Zum Abscheiden von Schadstoffen sind die verschiedensten Aggregate bekannt geworden, die alleine oder auch in unterschiedlichen Kombinationen eingesetzt werden können, wie z.B. elektrostatische und mechanische Abscheider (Filter) Fliehkraft- und Prallabscheider (Grobstaubabscheider), Wäschersysteme und Rauchgaskondensationen.

Bei den bekannt gewordenen Ausführungen solcher Rauchgasreinigungsanlagen sind die einzelnen Aggregate über Rauchgaskanäle miteinander verbunden. Dies hat jedoch den Nachteil eines großen Platzbedarfs, einer großen Oberfläche und den damit verbundenen Wärmeverlusten über die Oberflächen jedes einzelnen Aggregates und jedes Rauchgaskanales, mit dem damit verbundenen erhöhtem Risiko einer unbeabsichtigten Kondensation von Wasserdampf oder Aerosolen und Teeren in den einzelnen Aggregaten und Rauchgaskanälen.

Aus der AT 505295 A4 ist eine Feuerungseinheit, die einen Wärmetauscher und eine elektrostatische Staubabscheidevorrichtung umfasst, die in einem gemeinsamen Bereich angeordnet sind, bekannt.

Das Dokument GB 770932 A offenbart eine Rauchgasreinigungsanlage, umfassend ein Gehäuse, einen Zyklonabscheider, ein Elektrofilter und einen mechanischen Abscheider, durch die das zu reinigende Gas geführt wird.

Aufgabe der vorliegenden Erfindung ist es daher, eine Rauchgasreinigungsanlage der eingangs genannten Art derart auszubilden, dass der Platzbedarf und die Oberfläche der Rauchgasreinigungsanlage minimiert werden, um durch die damit verbundenen geringeren Abstrahlungsverluste im Vergleich zu einzelnen Aggregaten eine höhere Abgastemperatur und damit höhere Ausnutzung an rückgewinnbarer Wärme zu erreichen, und ferner die Abstrahlungswärme dazu zu nutzen, unbeabsichtigte Kondensation von Wasserdampf oder Aerosolen und Teeren in der Rauchgasreinigungsanlage weitestgehend zu vermeiden.

Diese Aufgabe wird bei der Rauchgasreinigungsanlage der eingangs genannten Art, bei der das Trockenelektrofilter, der Wärmeübertrager und der Grobstaubabscheider in einem gemeinsamen wärmeisolierenden Gehäuse angeordnet sind, erfindungsgemäß dadurch gelöst, dass ein Abschnitt des den Gasabgang des mindestens einen Trockenelektrofilters mit der Gasaustragsöffnung der Anlage verbindenden Verbindungskanals als Wärmeübertrager ausgebildet ist, um dem Rauchgasstrom unter Erwärmung eines von außerhalb des Gehäuses zugeführten gasförmigen oder flüssigen Mediums Wärme zu entziehen. Diese gemeinsame Anordnung der Aggregate in einem wärmeisolierten Gehäuse bewirkt auf Grund der geringeren Abstrahlungsverluste im Vergleich zu Einzelaggregaten eine höhere Abgastemperatur, bewirkt damit eine höhere Ausnutzung an rückgewinnbarer Wärme und bewirkt, dass die Wärmeabstrahlung dazu genutzt wird, die Wandungen des mindestens einen Filters zu erwärmen, sodass weitestgehend eine unbeabsichtigte Kondensation von Wasserdampf oder Aerosolen und Teeren verhindert wird. Durch die damit erzielten höheren Wandtemperaturen des Filters kann die Verfügbarkeit des Filters erhöht werden

Im Rahmen der Erfindung können die in einem gemeinsamen Gehäuse angeordneten Aggregate der Anlage so ausgebildet werden, dass diese weitestgehend ohne Rauchgaskanäle verbunden werden können. Sollte ein Rauchgaskanal zwischen zwei Aggregaten oder nach einem Aggregat vorhanden sein, ist es vorteilhaft, diesen Rauchgaskanal für den Einbau des Wärmeübertragers, d.h. des Apparates zur Wärmerückgewinnung von Restwärme im Abgas, zu nutzen.

Im Folgenden wird eine Kombination von Aggregaten angeführt.
a) Die Aggregate umfassen einen Grobstaubabscheider, mindestens ein an den Grobstaubabscheider angeschlossenes Filter und mindestens einen nach dem Filter angeordneten Wärmeübertrager.

Die Anordnung nach Variante a in einem gemeinsamen, wärmeisolierten Gehäuse bewirkt durch die geringeren Abstrahlungsverluste im Vergleich zu einzelnen Aggregaten eine höhere Abgastemperatur, bewirkt damit eine höhere Ausnutzung an rückgewinnbarer Wärme und bewirkt, dass die Wärmeabstrahlung dazu genutzt wird, die Wandungen des mindestens einen Filters so zu erwärmen, dass eine unbeabsichtigte Kondensation von Wasserdampf oder Aerosolen und Teeren weitestgehend verhindert wird. Die erzielten höheren Wandtemperaturen des mindestens einen Filters tragen daher wesentlich dazu bei, die Verfügbarkeit des mindestens einen Filters zu erhöhen und die Effizienz der Anlage zu steigern.

Eine nicht erfindungsgemäße Anordnung umfassend mindestens einen Grobstaubabscheider und mindestens ein an den Grobstaubabscheider angeschlossenes Filter in einem gemeinsamen, wärmeisolierten Gehäuse bewirkt auf Grund der geringeren Abstrahlungsverluste im Vergleich zu einzelnen Aggregaten eine höhere Abgastemperatur und bewirkt, dass die Wärmeabstrahlung dazu genutzt wird, die Wandungen des mindestens einen Filters so zu erwärmen, dass eine unbeabsichtigte Kondensation von Wasserdampf oder Aerosolen und Teeren weitestgehend verhindert wird. Die höhere Abgastemperatur und die erzielten höheren Wandtemperaturen des mindestens einen Filters tragen daher wesentlich dazu bei, die Verfügbarkeit des mindestens einen Filters zu erhöhen und die Effizienz der Anlage zu steigern.

Erfindungsgemäß ist ein Elektrofilter vorgesehen. Das Elektrofilter besteht beispielsweise aus mindestens einem Rohr oder mehreren Platten, in dem jeweils mittig eine Elektrode angeordnet ist. Zwischen dem als Niederschlagselektrode dienenden, üblicherweise geerdeten Rohr und dem als Sprühelektrode dienenden Draht liegt eine Hochspannung, die zwischen 10 und 100 kV betragen kann. Durch das elektrische Feld wird eine Ionisation des Abgases erzielt, sodass dieses elektrisch aufgeladen wird und den elektrischen Feldlinien folgend zu den Rohrwänden wandert. Das zu reinigende Abgas wird in das Rohr eingeführt und durchströmt das Rohr meist von unten nach oben, damit verhindert wird, dass das gereinigte Gas durch Schmutzpartikel wieder verunreinigt wird. Die Durchströmung kann auch von oben nach unten erfolgen. Das Rohr kann hierbei unterschiedliche Querschnittsformen aufweisen, wobei insbesondere ein kreisförmiger oder ein sechs- oder viereckiger Querschnitt verbreitet sind.

Eine Grobreinigung des Rauchgases erfolgt dabei durch einen Grobstaubabscheider, der bevorzugt als Prallabscheider oder Fliehkraftabscheider ausgebildet ist. Bevorzugt umfasst der Fliehkraftabscheider mindestens einen Zyklon. Bevorzugt ist der Grobstaubabscheider als Multizyklon ausgebildet. Ein Multizyklon besteht aus einer bestimmten Anzahl von Einzelzyklonen, die in einem gemeinsamen Gehäuse eingebaut sind.

Bevorzugt weist der Multizyklon eine Mehrzahl von Zyklonen auf, die in einer oder mehreren in Einströmrichtung des Rauchgases hintereinander liegenden Reihen angeordnet sind. Der Einlass des Multizyklons weist bevorzugt eine Mehrzahl von Leitblechen zur horizontalen Aufteilung des Rauchgases auf die Zyklone auf. Um die vertikale Gasverteilung auf die einzelnen Zyklonreihen zu optimieren, sind die Gaseinlässe der Reihen des Multizyklons bevorzugt treppenförmig angeordnet. Eine weitere bevorzugte Ausbildung sieht vor, dass Absperrorgane zum Verschließen der Öffnung zum Staubaustrag aus den Multizyklonen vorgesehen sind, um Querströmungen zwischen den Multizyklonen zu verhindern und um damit die Abscheidewirkung zu erhöhen.

Um die thermische Energie des Rauchgases möglichst effizient zu verwerten, ist gemäß einer bevorzugten Weiterbildung vorgesehen, dass ein den Gasabgang des Grobstaubabscheiders mit dem Gaseingang des mindestens einen Trockenelektrofilters verbindender Verbindungskanal eine Gasauslassöffnung bzw. ein Abgasstutzen zum optionalen Abzweigen von grobentstaubtem Gas aufweist.

Weiters kann auch zwischen dem Grobstaubabscheider und dem mindestens einen Filter ein Wärmeübertrager angeordnet sein, um dem Rauchgasstrom unter Erwärmung eines externen Mediums, insbesondere eines externen Gases, Wärme zu entziehen. Das erwärmte externe Medium des Wärmeübertragers kann für eine Luftvorwärmung, eine Heizwassererwärmung, Vorwärmung, Verdampfung oder eine vergleichbare Anwendung eingesetzt werden. Insbesondere ist hierbei vorgesehen, dass zwischen dem Gasabgang des Grobstaubabscheiders und dem Gaseingang des mindestens einen Filters mindestens ein Wärmeübertrager integriert ist, um dem Rauchgasstrom unter Erwärmung eines von außerhalb des Gehäuses zugeführten gasförmigen oder flüssigen Mediums Wärme zu entziehen. Bevorzugt ist hierbei vorgesehen, dass die Abwärme des Wärmeübertragers im Gehäuse der Gesamtanlage verbleibt und dadurch die Abgastemperatur im Elektrofilter ebenfalls hoch gehalten wird.

Der Wärmeübertrager ist vorzugsweise als Abgaskondensator ausgebildet.

Um die thermischen Abstrahlungsverluste weiter zu minimieren, ist bevorzugt vorgesehen, dass die den Gasabgang des Grobstaubabscheiders mit dem Gaseingang des mindestens einen Trockenelektrofilters verbindenden Verbindungskanäle im Wesentlichen vollständig im Gehäuse angeordnet sind.

Die erfindungsgemäße Ausbildung eignet sich besonders für die Anordnung einer Mehrzahl von parallelen Elektrofiltern, wobei die Elektrofilter bevorzugt parallel durchströmbar sind. Dies ermöglicht einerseits die Realisierung einer gemeinsamen Rauchgaszuführung zu den Elektrofiltern als auch eine gemeinsame Abführung des aus den einzelnen parallel angeordneten Elektrofiltern ausströmenden gereinigten Gases.

Die gemeinsame Rauchgaszuführung zu den Elektrofiltern erfolgt bevorzugt so, dass der den Gasabgang des Grobstaubabscheiders mit dem Gaseingang des mindestens einen Filters verbindende Verbindungskanal mit den Gaseingängen einer Mehrzahl von Elektrofiltern in Verbindung steht, um das über den Verbindungskanal zugeführte Rauchgas auf die Mehrzahl der Elektrofilter aufzuteilen.

Das mindestens eine Elektrofilter kann grundsätzlich beliebig ausgebildet sein. Bevorzugte Ausbildungen umfassen Röhrenelektrofilter und Plattenelektrofilter. Im Falle von Röhrenelektrofiltern bestehen diese jeweils aus einem Anodenrohr, in dem eine Sprühelektrode angeordnet ist. Die Sprühelektroden können dabei als beliebig ausgeführter Stab oder als Seil ausgebildet sein. Die Elektroden können entweder hängend oder stehend sowie einseitig oder beidseitig isoliert gegenüber dem Filtergehäuse angeordnet werden. Das Abgas strömt axial durch die Anodenrohre und dabei werden durch die negativ geladenen Sprühelektroden Elektronen an das mit Staubpartikeln beladene Gas abgegeben, wodurch freie Gasmoleküle ionisiert werden. Diese ionisierten Gasmoleküle (negative Ionen) lagern sich an den Staubpartikeln an und laden diese wiederum negativ. Die negativ geladenen Staubpartikel werden durch die positiv geladenen Anodenrohre angezogen, haften an diesen an und bilden eine Staubschicht an der inneren Anodenrohrwand. Sowohl die innere Wand der Anodenrohre als auch die Sprühelektroden werden bevorzugt automatisch durch Bürsten in frei programmierbaren Intervallen gereinigt und damit für den Betrieb funktionsfähig gehalten. Dabei wird durch das Bürsten im Vergleich zum üblichen Abklopfen der Elektroden ein wesentlich besseres und gleichmäßigeres Reinigungsergebnis erzielt, was zu verbesserter Staubabscheidung führt. Bevorzugt erfolgt die Reinigung der Filterrohre und optional der Isolatoren durch auf- und abfahrbare Bürsten oder eine andere Abstreifeinrichtung oder durch Einsprühen einer Flüssigkeit.

Da das Filter während der Reinigung nicht durchströmt werden darf, erlaubt ein bevorzugt elektromotorisch, pneumatisch oder hydraulisch angetriebener Abgasschieber für die kurze Zeitdauer der Reinigung eine Bypass-Schaltung in einen integrierten Abgas-Bypass, um das Abgas direkt dem Kamin zuzuführen. Der Schieber kann dabei im speziellen so ausgeführt werden, dass keine Blockade des Abgasweges möglich ist (eigensicher). Dieser Schieber kann auch in Elektrofilteranlagen ohne Zyklon zum Einsatz kommen.

Dabei ist der integrierte Multizyklon auch im Bypass-Betrieb wirksam.

Der Wärmeübertrager kann als Variante so ausgeführt werden, dass dieser entweder im Bypass-Betrieb wirksam ist oder nicht. Die Entnahme von Abgas zur Rauchgasrezirkulation erfolgt dabei ebenfalls als Variante vor oder nach dem Wärmeübertrager.

Gemäß einer bevorzugten Weiterbildung ist vorgesehen, dass der Verbindungskanal mit dem Staubauffangbehälter des mindestens einen Elektrofilters in Verbindung steht. Dadurch wird es ermöglicht, dass das Elektrofilter von unten nach oben durchströmt wird, was verhindert, dass das gereinigte Gas durch Schmutzpartikel wieder verunreinigt wird.

Auch der Austrag der abgeschiedenen Partikel kann gemeinsam erfolgen, wobei in diesem Zusammenhang bevorzugt vorgesehen ist, dass eine Mehrzahl von parallel angeordneten Elektrofiltern in einen gemeinsamen Partikelauffangbehälter mündet. Durch den gemeinsamen Partikelauffangbehälter können der aus den Zyklonen ausgetragene Staub und der aus den Elektrofiltern ausgetragene Staub in der Folge einer gemeinsamen Behandlung unterzogen werden. Als Variante kann der Staub aus den Zyklonen auch getrennt vom Filterstaub aufgefangen und ausgetragen werden.

Zum Austrag des Staubes aus den Zyklonen ist bevorzugt ein Absperrorgan, z.B. Klappe, Schieber oder Schleuse, vorgesehen.

Bei Anwendungen zur Rauchgasreinigung besteht die Anforderung, die Rauchgasmenge gleichmäßig auf die Elektrofilter zu verteilen und die Reinigungsanlage an wechselnde Bedingungen, wie z.B. wechselnde Rauchgasmengen, wechselnde Verunreinigungsgrade, wechselnde Rauchgastemperaturen, etc. anzupassen. Dies ist aber nicht ohne weiteres möglich, da Elektrofilter beispielsweise mit einem Mindestvolumenstrom beaufschlagt werden müssen, um effizient betrieben werden zu können. Eine gleichmäßige Verteilung der Volumenströme und Anpassung an wechselnde Volumenströme gelingt im Rahmen der vorliegenden Erfindung bevorzugt dadurch, dass die Elektrofilter einzeln oder in Gruppen zu- und weggeschalten werden können. Zu diesem Zweck können die Auslassöffnungen der Elektrofilter mittels Regelorganen, wie z.B. Klappen, Schieber oder dgl. teilweise oder ganz verschlossen werden. Eine weitere Möglichkeit der Anpassung an wechselnde Bedingungen wie z.B. Rauchgastemperatur ist das Vorsehen eines Bypasskanals, mit welchem das im Grobstaubabscheider vorgereinigte Rauchgas an den Elektrofiltern vorbeigeleitet werden kann.

Die Ausführung ist dabei bevorzugt so getroffen, dass der den Gasabgang des Grobstaubabscheiders mit dem Gaseingang des mindestens einen Elektrofilters verbindende Verbindungskanal vor dem Gaseingang des Elektrofilters eine Abzweigung für eine den Elektrofilter umgehende Bypassleitung aufweist.

Die Bypassleitung und der Gasausgang des mindestens einen Elektrofilters sind bevorzugt mit einer gemeinsamen Gasaustragsöffnung der Anlage verbunden.

Um eine Einstellung der durch den mindestens einen Elektrofilter und der am mindestens einen Elektrofilter vorbeigeleiteten Gasmengen zu ermöglichen, ist bevorzugt mindestens ein Absperrorgan, wie z.B. ein Schieber, vorgesehen, um den Durchflussquerschnitt der Bypassleitung und ggf. des Gasausgangs des mindestens einen Elektrofilters abzusperren.

Im Falle der Anordnung eines Wärmeübertragers kann die Bypassleitung zur Umgehung des mindestens einen Elektrofilters vor oder nach dem Wärmeübertrager wegführen.

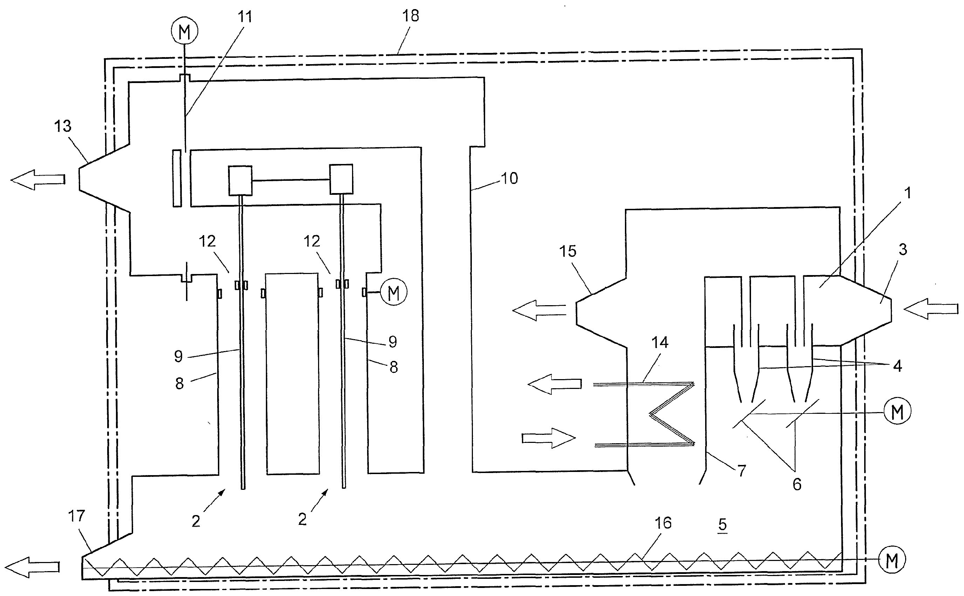

Die Erfindung wird nachfolgend anhand eines in der Zeichnung schematisch dargestellten Ausführungsbeispiels näher erläutert. In dieser zeigt Fig.1 eine schematische Darstellung einer Rauchgasreinigungsanlage.

Die Rauchgasreinigungsanlage gemäß Fig. 1 umfasst einen Multizyklon 1 und eine Mehrzahl von Trockenelektrofiltern 2. Das Rauchgas stammt aus einer nicht näher bezeichneten Verbrennungsanlage zur Verbrennung von z.B. Biomasse, Reststoffen, Klärschlamm und ähnlich oder ist ein Prozessabgas z.B. aus der thermochemischen Vergasung, Industrieprozessen und ähnlich. Das Rauchgas wird über einen Gaseinlass 3 in die Reinigungsanlage geführt und mittels nicht näher dargestellten Leitblechen den einzelnen Zyklonen 4 des Multizyklons 1 zugeführt. Die Zyklone 4 sind in einer oder mehreren, insbesondere zwei hintereinander gelegenen Reihen angeordnet, wobei beispielsweise ein oder mehrere Zyklone 4 je Reihe vorgesehen sind. Dabei sind die Zyklone 4 der zweiten, in Einströmrichtung des Gases weiter hinten liegenden Reihe gegenüber den Zyklonen 4 der ersten Reihe erhöht angeordnet (nicht dargestellt), sodass das Rauchgas mittels eines nicht dargestellten Treppenrosts gleichmäßig auf die beiden Zyklonreihen verteilt werden kann. Die in den Zyklonen 4 des Multizyklons 1 abgeschiedenen Partikel werden über motorisch angetriebene Absperrorgane, z.B. Klappen, Schieber oder Schleusen 6 in einen gemeinsamen Staubauffangbehälter 5 ausgetragen. Durch die Anordnung mehrerer Absperrorgane an den Staubauslässen an dem Zyklon werden Querströmungen zwischen den Zyklonen minimiert.

Das in dem Multizyklon 1 grobentstaubte Gas wird über einen Verbindungskanal 7 den Elektrofiltern 2 zugeführt. Bevorzugt steht der Verbindungskanal 7 in offener Verbindung mit dem Staubauffangbehälter 5 bzw. führt durch diesen hindurch. Der Staubauffangbehälter 5 ist hierbei so ausgebildet, dass er sich auch über den Austragsbereich der Elektrofilter 2 erstreckt. Auf diese Weise gelingt durch den Staubauffangbehälter 5 bzw. den Verbindungskanal 7 eine optimale Verteilung des grobentstaubten Gases auf die Elektrofilter 2.

Das grobentstaubte Gas wird in den Elektrofiltern 2 nach oben geleitet, wo es einer weiteren Reinigung unterzogen wird. Die Elektrofilter 2 umfassen jeweils ein als Niederschlagselektrode ausgebildetes Rohr 8, in dem ein als Sprühelektrode ausgebildeter Draht 9 oder eine beliebig geformte Stange oder dgl. mit oder ohne Sprühspitzen angeordnet ist. Die Sprühelektrode 9 kann stehend oder hängend angeordnet sein. Die Sprühelektrode 9 kann einseitig oder beidseitig mit Isolatoren gegenüber dem Gehäuse isoliert sein. Im Inneren der Elektrofilter 2 kann zusätzlich jeweils eine geeignete Einrichtung zum Reinigen des Rohrs 8 vorgesehen werden, z.B. in Form von Bürsten oder Schnecken, um am Rohr 8 anhaftendes festes oder flüssiges Material zu entfernen.

Vom Verbindungskanal 7 zweigt vor dem Gaseingang der Elektrofilter 2 eine Bypassleitung 10 ab, mit welcher die Elektrofilter 2 umgangen werden können. In der Bypassleitung 10 ist ein elektromotorisch angetriebener Schieber 11 angeordnet, mit welchem die durch die Bypassleitung 10 strömende Gasmenge und/oder die über den Gasausgang 12 der Elektrofilter 2 ausströmende Gasmenge eingestellt werden können. Die Bypassleitung 10 und der Gasausgang 12 der Elektrofilter 2 führen nach dem Schieber 11 zusammen und münden gemeinsam in die Gasaustragsöffnung 13 der Anlage. Mit dem Schieber 11 kann somit z.B. eingestellt werden, ob ausschließlich gereinigtes Gas aus den Elektrofiltern 2 über den Gasausgang 12 oder ausschließlich grobentstaubtes Gas über die Bypassleitung 10 ausgetragen werden soll.

Die Verbindungsleitung 7 führt über einen Wärmeübertrager 14, in welchem dem Gasstrom Wärme entzogen werden kann. Darüber hinaus ist optional ein von der Verbindungsleitung 7 abzweigender Stutzen 15 vorgesehen, über welchen mindestens eine Teilmenge des grobentstaubten Gases abgezogen und der Feuerung rezirkuliert werden kann.

Ein nicht näher dargestellter Wärmeübertrager, in welchem dem Gasstrom Wärme entzogen werden kann, ist auch im Verbindungskanal zur Gasaustragsöffnung 13 angeordnet.

Ein nicht näher dargestellter Ventilator sorgt für den ggf. erforderlichen Unter- oder Überdruck, um das Rauchgas durch die Reinigungsaggregate zu ziehen oder zu drücken.

Das im Staubauffangbehälter 5 aufgesammelte Material kann mittels einer Förderschnecke 16 zu einer Materialaustrags-öffnung 17 transportiert werden.

Alle oben beschriebenen Bauteile der Anlage sind in einem gemeinsamen Gehäuse 18 angeordnet, das über eine geeignete Wärmeisolierung verfügt, um die Abstrahlungsverluste nach außen zu minimieren. Das Gehäuse 18 hat bevorzugt eine Wärmeleitfähigkeit der Klasse 0,03-0,04 oder besser.

## Patentansprüche

1. Rauchgasreinigungsanlage zur Abscheidung von Schadstoffen aus Rauchgasen umfassend mindestens einen Grobstaubabscheider, ein an den Grobstaubabscheider angeschlossenes Trockenelektrofilter (2) und mindestens einen Wärmeübertrager (14), wobei der Grobstaubabscheider, das Trockenelektrofilter (2), und der Wärmeübertrager (14) miteinander verbunden und nacheinander von dem Rauchgas durchströmbar sind, wobei das Trockenelektrofilter (2), der Wärmeübertrager (14) und der Grobstaubabscheider in einem gemeinsamen wärmeisolierten Gehäuse (18) angeordnet sind, **dadurch gekennzeichnet, dass** ein Abschnitt des den Gasabgang (12) des mindestens einen Trockenelektrofilters (2) mit der Gasaustragsöffnung (13) der Anlage verbindenden Verbindungskanals (7) als Wärmeübertrager (14) ausgebildet ist, um dem Rauchgasstrom unter Erwärmung eines von außerhalb des Gehäuses (18) zugeführten gasförmigen oder flüssigen Mediums Wärme zu entziehen.

2. Rauchgasreinigungsanlage nach Anspruch 1, **dadurch gekennzeichnet, dass** der Grobstaubabscheider als Prallabscheider oder Fliehkraftabscheider, bevorzugt als Zyklon oder Multizyklon (1), ausgebildet ist.

3. Rauchgasreinigungsanlage nach Anspruch 2, **dadurch gekennzeichnet, dass** der Multizyklon (1) eine Mehrzahl von Zyklonen (4) aufweist, die in einer oder mehreren in Einströmrichtung des Rauchgases hintereinander liegenden Reihen angeordnet sind.

4. Rauchgasreinigungsanlage nach Anspruch 2 oder 3, **dadurch gekennzeichnet, dass** der Einlass des Multizyklons (1) eine Mehrzahl von Leitblechen zur horizontalen Aufteilung des Rauchgases auf die Zyklone (4) aufweist.

5. Rauchgasreinigungsanlage nach einem der Ansprüche 2 bis 4, **dadurch gekennzeichnet, dass** Absperrorgane (6) zum Verschließen der Öffnung zum Staubaustrag aus den Multizyklonen (1) vorgesehen sind.

6. Rauchgasreinigungsanlage nach einem der Ansprüche 3 bis 5, **dadurch gekennzeichnet, dass** die Gaseinlässe der Reihen des Multizyklons (1) treppenförmig angeordnet sind.

7. Rauchgasreinigungsanlage nach einem der Ansprüche 1 bis 6, **dadurch gekennzeichnet, dass** ein den Gasabgang des Grobstaubabscheiders mit dem Gaseingang des mindestens einen Trockenelektrofilters verbindender Verbindungskanal (7) eine Gasauslassöffnung (15) zum optionalen Abzweigen von grobentstaubtem Gas aufweist.

8. Rauchgasreinigungsanlage nach einem der Ansprüche 1 bis 7, **dadurch gekennzeichnet, dass** der Wärmeübertrager (14) als Abgaskondensator ausgebildet ist.

9. Rauchgasreinigungsanlage nach einem der Ansprüche 1 bis 8, **dadurch gekennzeichnet, dass** der den Gasabgang des Grobstaubabscheiders mit dem Gaseingang des mindestens einen Trockenelektrofilters verbindende Verbindungskanal (7) und/oder der den Gasabgang (12) des mindestens einen Trockenelektrofilters (2) mit der Gasaustragsöffnung (13) der Anlage verbindende Verbindungskanal (7) im Wesentlichen vollständig im Gehäuse (18) angeordnet sind.

10. Rauchgasreinigungsanlage nach einem der Ansprüche 1 bis 9, **dadurch gekennzeichnet, dass** der den Gasabgang des Grobstaubabscheiders mit dem Gaseingang des mindestens einen Trockenelektrofilters (2) verbindende Verbindungskanal (7) vor dem Gaseingang des Filters eine Abzweigung für eine den Filter umgehende Bypassleitung (10) aufweist.

11. Rauchgasreinigungsanlage nach Anspruch 10, **dadurch gekennzeichnet, dass** die Bypassleitung (10) und der Gasausgang (12) des mindestens einen Trockenelektrofilters (2) mit einer gemeinsamen Gasaustragsöffnung (13) der Anlage verbunden sind.

12. Rauchgasreinigungsanlage nach Anspruch 10 oder 11, **dadurch gekennzeichnet, dass** mindestens ein Absperrorgan, wie z.B. ein Schieber (11), vorgesehen ist, um den Durchflussquerschnitt der Bypassleitung (10) des mindestens einen Trockenelektrofilters (2) abzusperren.

13. Rauchgasreinigungsanlage nach einem der Ansprüche 1 bis 12, **dadurch gekennzeichnet, dass** der den Gasabgang des Grobstaubabscheiders mit dem Gaseingang des mindestens einen Trockenelektrofilters (2) verbindende Verbindungskanal (7) mit den Gaseingängen einer Mehrzahl von Trockenelektrofiltern (2) in Verbindung steht, um das über den Verbindungskanal (7) zugeführte Rauchgas auf die Mehrzahl der Trockenelektrofilter (2) aufzuteilen.

14. Rauchgasreinigungsanlage nach einem der Ansprüche 1 bis 13, **dadurch gekennzeichnet, dass** eine Mehrzahl von Trockenelektrofiltern (2) vorgesehen ist, deren Auslassöffnungen Regelorgane, wie z.B. Klappen, Schieber oder dgl., zum teilweisen oder vollständigen Verschließen derselben zugeordnet sind, um die Trockenelektrofilter (2) einzeln oder in Gruppen zu- und wegzuschalten.

## Claims

1. A flue gas purification system for the separation of pollutants from flue gases comprising at least one coarse dust separator, a dry electrostatic precipitator (2) connected to the coarse dust separator and at least one heat exchanger (14), wherein the coarse dust separator, the dry electrostatic precipitator (2) and the heat exchanger (14) are connected to one another and can be flowed through in succession by the flue gas, wherein the dry electrostatic precipitator (2), the heat exchanger (14) and the coarse dust separator are arranged in a common heat-insulated housing (18), **characterized in that** a portion of the connecting channel (7) that connects the gas outlet (12) of the at least one dry electrostatic precipitator (2) with the gas outlet opening (13) of the system is designed as a heat exchanger (14), in order to extract heat from the flue gas stream while heating a gaseous or liquid medium supplied from the outside of the housing (18).

2. Flue gas purification system according to claim 1, **characterized in that** the coarse dust separator is designed as an impact separator or centrifugal separator, preferably as a cyclone or multi-cyclone (1).

3. Flue gas purification system according to claim 2, **characterized in that** the multi-cyclone (1) comprises a plurality of cyclones (4), which are arranged in one or more rows arranged one after the other in the in-flow direction of the flue gas.

4. Flue gas purification system according to claim 2 or 3, **characterized in that** the inlet of the multi-cyclone (1) has a plurality of baffles for the horizontal splitting of the flue gas to the cyclones (4).

5. Flue gas purification system according to any one of claims 2 to 4, **characterized in that** shut-off devices (6) are provided for closing the opening for the dust discharge from the multi-cyclones (1).

6. Flue gas purification system according to any one of claims 3 to 5, **characterized in that** the gas inlets of the rows of multi-cyclones (1) are arranged in a staged manner.

7. Flue gas purification system according to any one of claims 1 to 6, **characterized in that** a connecting channel (7) that connects the gas outlet of the coarse dust separator with the gas inlet of the at least one dry electrostatic precipitator comprises a gas outlet opening (15) for the optional branching off of gas that is dedusted from coarse components.

8. Flue gas purification system according to any one of claims 1 to 7, **characterized in that** the heat exchanger (14) is designed as a flue gas condenser.

9. Flue gas purification system according to any one of claims 1 to 8, **characterized in that** connecting channel (7) connecting the gas outlet of the coarse dust separator with the gas inlet of the at least one dry electrostatic precipitator and/or the connecting channel (7) connecting the gas outlet (12) of the at least one dry electrostatic precipitator (2) with the gas discharge opening (13) of the system are arranged substantially completely in the housing (18).

10. Flue gas purification system according to any one of claims 1 to 9, **characterized in that** the connecting channel (7) connecting the gas outlet of the coarse dust separator with the gas inlet of the at least one dry electrostatic precipitator (2) comprises a branch before the gas inlet of the filter for a bypass line (10) bypassing the filter.

11. Flue gas purification system according to claim 10, **characterized in that** the bypass line (10) and the gas outlet (12) of the at least one dry electrostatic precipitator (2) are connected with a common gas discharge opening (13) of the system.

12. Flue gas purification system according to claim 10 or 11, **characterized in that** at least one shut-off device, such as a gate (11), is provided to shut off the flow cross section of the bypass line (10) of the at least one dry electrostatic precipitator (2).

13. Flue gas purification system according to any one of claims 1 to 12, **characterized in that** the connecting channel (7) connecting the gas outlet of the coarse dust separator with the gas inlet of the at least one dry electrostatic precipitator (2) is in connection with the gas inlets of a plurality of dry electrostatic precipitators (2), in order to divide the flue gas that is supplied via the connecting channel (7) to the majority of the dry electrostatic precipitators (2).

14. Flue gas purification system according to any one of claims 1 to 13, **characterized in that** a plurality of dry electrostatic precipitators (2) is provided, to the outlet openings thereof regulating devices, such as flaps, sliders or the like are assigned for the partial or complete closure thereof, in order to connect or shut-off the dry electrostatic precipitators (2) individually or in groups.

## Revendications

1. Installation de purification de gaz de fumée destinée à la séparation de substances toxiques des gaz de fumée comprenant au moins un séparateur de poussières grossières, un dépoussiéreur électrostatique à voie sèche (2) relié au séparateur de poussières grossières et au moins un échangeur de chaleur (14), dans laquelle le séparateur de poussières grossières, le dépoussiéreur électrostatique à voie sèche (2) et l'échangeur de chaleur (14) sont reliés entre eux et peuvent être traversés les uns après les autres par le gaz de fumée, dans laquelle le dépoussiéreur électrostatique à voie sèche (2), l'échangeur de chaleur (14) et le séparateur de poussières grossières sont agencés dans un boîtier calorifugé (18) commun, **caractérisée en ce qu'**une partie du canal de liaison (7) reliant la sortie de gaz (12) du au moins un dépoussiéreur électrostatique à voie sèche (2) à l'orifice d'évacuation de gaz (13) de l'installation est conçue sous forme d'échangeur de chaleur (14) afin d'extraire de la chaleur du flux de gaz de fumée par chauffage d'un milieu gazeux ou liquide fourni depuis l'extérieur du boîtier (18).

2. Installation de purification de gaz de fumée selon la revendication 1, **caractérisée en ce que** le séparateur de poussières grossières est conçu sous forme de séparateur à choc ou de séparateur à force centrifuge, de préférence sous forme de cyclone ou de multicyclone (1).

3. Installation de purification de gaz de fumée selon la revendication 2, **caractérisée en ce que** le multicyclone (1) présente une pluralité de cyclones (4), qui sont agencés en une ou plusieurs rangées situées les unes derrière les autres dans la direction d'admission du gaz de fumée.

4. Installation de purification de gaz de fumée selon la revendication 2 ou 3, **caractérisée en ce que** l'entrée du multicyclone (1) présente une pluralité de déflecteurs destinés à une répartition horizontale du gaz de fumée entre les cyclones (4).

5. Installation de purification de gaz de fumée selon l'une quelconque des revendications 2 à 4, **caractérisée en ce que** des organes d'obturation (6) destinés à la fermeture de l'orifice d'évacuation des poussières hors des multicyclones (1) sont prévus.

6. Installation de purification de gaz de fumée selon l'une quelconque des revendications 3 à 5, **caractérisée en ce que** les entrées de gaz des rangées du multicyclone (1) sont agencées en escalier.

7. Installation de purification de gaz de fumée selon l'une quelconque des revendications 1 à 6, **caractérisée en ce qu'**un canal de liaison (7) reliant la sortie de gaz du séparateur de poussières grossières à l'entrée de gaz du au moins un dépoussiéreur électrostatique à voie sèche présente un orifice de sortie de gaz (15) destiné à une dérivation facultative du gaz débarrassé de ses poussières grossières.

8. Installation de purification de gaz de fumée selon l'une quelconque des revendications 1 à 7, **caractérisée en ce que** l'échangeur de chaleur (14) est conçu sous forme de condenseur de gaz d'échappement.

9. Installation de nettoyage de gaz de fumée selon l'une quelconque des revendications 1 à 8, **caractérisée en ce que** le canal de liaison (7) reliant la sortie de gaz du séparateur de poussières grossières à l'entrée de gaz du au moins un dépoussiéreur électrostatique à voie sèche et/ou le canal de liaison (7) reliant la sortie de gaz (12) du au moins un dépoussiéreur électrostatique à voie sèche (2) à l'orifice d'évacuation de gaz (13) de l'installation sont agencés sensiblement entièrement dans le boîtier (18).

10. Installation de purification de gaz de fumée selon l'une quelconque des revendications 1 à 9, **caractérisée en ce que** le canal de liaison (7) reliant la sortie de gaz du séparateur de poussières grossières à l'entrée de gaz du au moins un dépoussiéreur électrostatique à voie sèche (2) présente devant l'entrée de gaz du dépoussiéreur une dérivation pour une conduite de dérivation (10) contournant le dépoussiéreur.

11. Installation de purification de gaz de fumée selon la revendication 10, **caractérisée en ce que** la conduite de dérivation (10) et la sortie de gaz (12) du au moins un dépoussiéreur électrostatique à voie sèche (2) sont reliées à un orifice d'évacuation de gaz (13) commun de l'installation.

12. Installation de purification de gaz de fumée selon la revendication 10 ou 11, **caractérisée en ce qu'**au moins un organe d'obturation, par exemple un registre (11), est prévu afin d'obturer la section transversale d'écoulement de la conduite de dérivation (10) du au moins un dépoussiéreur électrostatique à voie sèche (2).

13. Installation de purification de gaz de fumée selon l'une quelconque des revendications 1 à 12, **caractérisée en ce que** le canal de liaison (7) reliant la sortie de gaz du séparateur de poussières grossières à l'entrée de gaz du au moins un dépoussiéreur électrostatique à voie sèche (2) est en liaison avec les entrées de gaz d'une pluralité de dépoussiéreurs électrostatiques à voie sèche (2) afin de répartir entre la pluralité des dépoussiéreurs électrostatiques à voie sèche (2) le gaz de fumée fourni par l'intermédiaire du canal de liaison (7).

14. Installation de purification de gaz de fumée selon l'une quelconque des revendications 1 à 13, **caractérisée en ce qu'**une pluralité de dépoussiéreurs électrostatiques à voie sèche (2) sont prévus, dont les orifices de sortie sont associés à des organes de réglage analogues, par exemple des clapets, des registres ou similaires, destinés à leur fermeture partielle ou complète, afin d'activer ou de désactiver les dépoussiéreurs électrostatiques à voie sèche (2) de manière individuelle ou par groupes.
